(19) Europäisches Patentamt
European Patent Office
Office européen des brevets

(11) Publication number: **0 317 260 A2**

(12) # EUROPEAN PATENT APPLICATION

(21) Application number: 88310767.4

(51) Int. Cl.4: A01N 25/30 , A01N 25/34

(22) Date of filing: 15.11.88

(30) Priority: 16.11.87 US 120999

(43) Date of publication of application: 24.05.89 Bulletin 89/21

(84) Designated Contracting States: AT BE CH DE ES FR GB GR IT LI LU NL SE

(71) Applicant: ICI AMERICAS INC
Concord Pike & New Murphy Road
Wilmington Delaware 19897(US)

(72) Inventor: Hobbs, David Gordon
755 Sequoia Woods Place
Concord California 94518(US)

(74) Representative: Bishop, Nigel Douglas et al
Imperial Chemical Industries PLC Legal Department: Patents PO Box 6 Bessemer Road
Welwyn Garden City Herts, AL7 1HD(GB)

(54) **Transportable compositions containing a toxicant and a method of producing and using the same.**

(57) A reversible composition consisting of a solid matrix wherein a pesticide is uniformly dispersed or distributed within a solidifying agent. This composition comprises (i.) a liquid pesticide, solid pesticide or solution or dispersion thereof and (ii.) a solid surfactant or a surfactant capable of solidifying at room temperature selected from the group consisting of polyoxyalkylated alkyl phenols, polyaryl phenol ethoxylates, sorbitan fatty acids and polyoxyalkylated derivatives thereof, polyoxyalkylated branched or linear mono alcohols, diols or polyols, polyoxyalkylated esters, polyoxyalkylated fatty amines and ethylene oxide propylene oxide block copolymers.

This solid matrix can be shipped without presenting substantial danger to either the environment or animal life. The solid matrix may be transformed into a liquid state by heat and/or agitation.

EP 0 317 260 A2

# TRANSPORTABLE COMPOSITIONS CONTAINING A TOXICANT AND A METHOD OF PRODUCING AND USING THE SAME

## Background of the Invention

Due to their toxicity, manufacturers of pesticides generally recommend that personal contact with their products be minimized. Some pesticides, such as rodenticides, are so toxic that manufacturers recommend the potential user to avoid all contact with them. The greater the toxicity of the pesticide, the more pest control operators (PCOs) are encouraged to use gloves, respirators, goggles and overalls when handling the products.

Prior to introducing toxic pesticidally active ingredients into the marketplace, manufacturers carefully weigh the benefits of the toxicant with the environmental and health risks involved in transporting and using the product. Generally, such toxicants are prepared and shipped in their liquid or powdered state. Small quantities of the toxicants are shipped in pint bottles, whereas large quantities are shipped in drums ranging from 300 to 600 lbs. Severe environmental harm, along with health dangers from physical contact, exists if such containers are dislodged, punctured, or ruptured.

## Summary of the Invention

It is an object of this invention to provide a toxic pesticidal formulation in which the efficacy of the pesticide is unaffected and which does not present substantial danger to either the environment or animal life during transport. Further, when the toxicant is a rodenticide, it is also an object of this invention to provide a formulation which is palatable to the targeted rodent. It is further an object of this invention to provide a method of producing and using such formulations.

The objectives of this invention are obtained by a reversible composition consisting of a solid matrix wherein a pesticide is uniformly dispersed or distributed within a solidifying agent. This composition comprises (i.) a liquid pesticide, solid pesticide or solution or dispersion thereof and (ii.) a solid surfactant or a surfactant capable of solidifying at room temperature selected from the group consisting of polyoxyalkylated alkyl phenols, polyaryl phenol ethoxylates, sorbitan fatty acids and polyoxyalkylated derivatives thereof, polyoxyalkylated branched or linear mono alcohols, diols or polyols, polyoxyalkylated esters, polyoxyalkylated fatty amines and ethylene oxide propylene oxide block copolymers.

## Detailed Description of the Invention

The risks in transporting compositions containing toxicants are dramatically reduced by transporting the composition as a solid matrix which, if disrupted during transit will not leak from its shipping container or soak into the contacting substrate. As a result, contamination of waterways and contact surfaces is minimized.

The composition of this invention is readily converted to a liquid state. As such, when it safely reaches its destination, it may be transformed into a liquid without affecting the efficacy of the toxicant.

The composition of this invention must remain as a solid matrix during transport. In other words, the shipping temperature must be such that the composition being transported will resist deformation if removed from its shipping container. Generally, the composition must be transported at a temperature less than its pour point. The pour point herein is defined as the lowest temperature at atmospheric pressure at which the composition continues to flow.

The viscosity of the transportable composition of this invention is typically in excess of 150,000 cps.

### Solid Surfactants

The solid surfactants useful in this invention preferably have a melting point greater than 30 °C and are selected from the group consisting of

1. polyoxyalkylated alkyl phenols;
2. polyaryl phenol ethoxylates;
3. sorbitan fatty acids and polyoxyalkylated derivatives thereof;
4. polyoxyalkylated branched or linear alcohols, diols or polyols; (This group can also be referred to as polyoxyalkylated ethers.)
5. polyoxyalkylated esters;
6. polyoxyalkylated fatty amines; and
7. ethylene oxide propylene oxide block copolymers.

The polyoxyalkylated alkyl phenols are produced by condensing 1 mole of a higher alkyl phenol with greater than 10 moles, preferably 10 to 100 moles, of alkylene oxide, preferably ethylene and/or propylene oxide. The phenol typically contains one or more $C_4$ to $C_{18}$ alkyl group(s). Nonyl and octyl phenols are especially preferred. Examples include the condensation products of 1 mole of nonyl phenol and its isomers and 30 and 40 moles of ethylene oxide.

In place of such condensation products, or in combination therewith, polyaryl phenol ethoxylates may be used. In these products the above-referenced phenol is replaced with a polyaryl phenol. SOPROPHOR S/40 P, commercially available from Rhone-Poulenc, is most preferred. Other examples are recited in Rhone-Poulenc's "Pesticide Formulations Catalog," herein incorporated by reference.

The sorbitan fatty acid is derived from 1 mole of sorbitan and between one and three moles of at least one $C_{12}$ to $C_{20}$ saturated or unsaturated fatty acid such as palmitic, myristic and stearic acid. Examples of suitable sorbitan fatty acids include sorbitan monopalmitate, sorbitan monostearate, and sorbitan tristearate.

The polyoxyalkylated sorbitan fatty acid esters are derived from 1 mole of the above described sorbitan fatty acid and an alkylene oxide, preferably less then 100 moles of alkylene oxide, preferably ethylene and/or propylene oxide. Specific examples of polyoxyalkylated sorbitan fatty acid esters include the condensation products of 20 moles of ethylene oxide and 1 mole of either sorbitan monostearate, sorbitan monopalmitate or sorbitan tristearate.

The polyoxyalkylated branched or linear alcohols, diols or polyols are derived from 1 mole of a $C_{10}$ to $C_{20}$ saturated or unsaturated primary, secondary or tertiary alcohol and greater than 10, preferably between 10 and 100, most preferably 20 to 60, moles of alkylene oxide, preferably ethylene and/or propylene oxide. Examples include the reaction product of 23 moles of ethylene oxide and 1 mole of olelyl alcohol; a $C_{11}$-$C_{15}$ secondary alcohol with 15 or 20 moles of ethylene oxide: 1 mole of tridecyl alcohol and 16 moles of ethylene oxide; 1 mole of tridecyl alcohol and 30 moles of ethylene oxide.

The polyoxyalkylated esters are of the formula

$$R-\overset{\overset{O}{\|}}{C}-O(CH_2CH_2O)_xR^1$$

wherein
R is a saturated or unsaturated aliphatic or acyclic $C_{10}$-$C_{22}$ group,

$R^1$ is -H or $-\underset{\underset{O}{\|}}{C}-R$; and

X is between 1 and 100.

These esters are produced by reacting one mole of the appropriate acid with the alkylene oxide, preferably ethylene and/or propylene oxide. An example of such an additive is polyoxyethylene (20) glycol stearate.

The polyoxyalkylated fatty amines are produced by reacting 1 mole of a $C_{16}$ to $C_{22}$ saturated or unsaturated fatty amine with between 2 and 10 moles of alkylene oxide, preferably ethylene and/or propylene oxide, most preferably ethylene oxide. Suitable fatty amines are stearyl and tallow amines.

The ethylene oxide propylene oxide block copolymers useful in this invention preferably have a molecular weight between 4,500 and 20,000.

Suitable methods for producing the above surfactants are well known in the art and are discussed in many standard textbooks; such as the Surfactant Science Series, Vol. I to VII, Martin J. Schick, ed., Marcel Dekker, Inc., publisher, and particularly Vol. I, entitled Nonionics.

Further, combinations of the above solid surfactants may also be employed. The total amount of such surfactants in the composition is between 5-99.9 weight percent. When the pesticide employed however is a solid less than 50 weight percent is normally used. When the activity of the pesticide is high (normally with rodenticides), the amount of solid surfactant is generally between 70 and 99.9 weight percent.

Pesticidal Material

The toxic material of this invention may be either a liquid pesticide, solid pesticide or solution or dispersion thereof.

This invention is particularly useful for the transport of rodenticides due to their extremely toxic nature. Any conventional rodenticide may be employed as the toxicant in this invention. Representative rodenticides may be selected from the group consisting of:

1. 4-Hydroxycoumarin derivatives such as:

A. Compounds of the formula

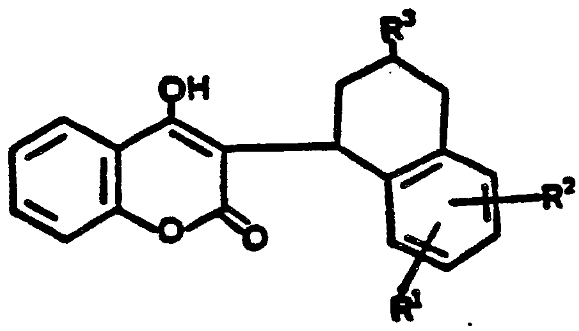

wherein
$R^1$ and $R^2$ are independently selected from the group consisting of hydrogen or halogen atoms (preferably chlorine or bromine) and alkyl or alkoxy groups (preferably having from 1 to 6 carbon atoms),
$R^3$ is an aryl group having the formula

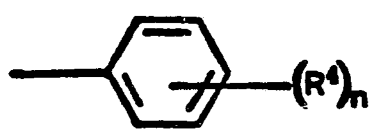

where n is 1 or 2, and
$R^4$ is independently selected from the group consisting of halogen atoms, a straight or branched chain alkyl or alkoxy group, preferably containing at least 2, more preferably from 5 to 12 carbon atoms, a cycloalkyl, preferably cyclohexyl group, a benzyl, phenyl, halogenophenyl, phenoxy and halogenophenoxy group. The halogen atom or atoms are preferably chlorine or bromine. When n is 1, $R^4$ is preferably in the para position and when n is 2, one of the $R^4$ groups is preferably in the para position. Preferably $R^3$ contains at least 1 (but not more than 3) and optimally not more than 2 halogen atoms.

Especially preferred are the compounds of the structural formula

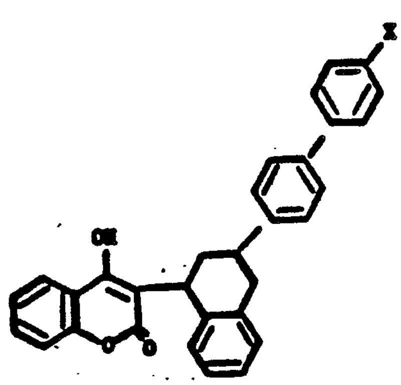

wherein X is hydrogen and bromine, commonly referred to as difenacoum and brodifacoum, respectively. These compounds are disclosed in U.S. Patent Nos. 3,957,824 and 4,035,505, which are hereby incorporated by reference.

B. Compounds of the formula

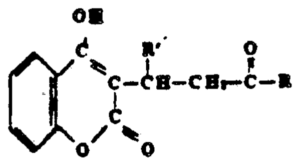

in which R represents a member of the class consisting of $C_{1-6}$ alkyl groups, preferably methyl, phenyl and hydroxy-substituted phenyl groups: and R′ represents a member of the class consisting of $C_{1-6}$ alkyl groups, preferably methyl, phenyl and phenyl groups containing a substituent of the formula OR′ in at least one of the para or meta positions, wherein R′ is hydrogen or a $C_{1-6}$ alkyl. Such compounds are disclosed in U.S. Patent No. 2,427,578, herein incorporated by reference. Most preferred is the compound wherein R′ is phenyl and R is methyl, commonly referred to as warfarin.

C. Compounds of the formula

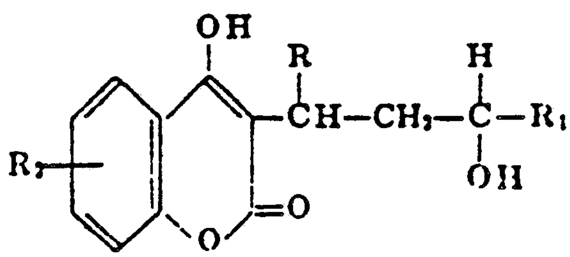

wherein
R is hydrogen, phenyl, halophenyl, dihalophenyl, nitrophenyl, methoxyphenyl, tolyl, methylene dioxyphenyl or furyl,
$R_1$ is methyl, phenyl, halophenyl, nitrophenyl, diphenyl, halodiphenyl, nitrodiphenyl and naphthyl radicals, and
$R_2$ is hydrogen or a halogen.
Such compounds are disclosed in U.S. Patent No. 3,764,693, herein incorporated by reference. Especially preferred are the compounds wherein R is -H or $-C_6H_5$; $R_1$ is $-C_6H_5$ or $-C_6H_4-C_6H_4X$ wherein X is Br or C1: and $R_2$ is H. Especially preferred is the compound wherein $R_2$ is hydrogen, R is $-C_6H_5$ and $R_1$ is

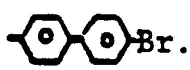

This compound is commonly referred to as Bromadiolone.

D. Compounds of the formula

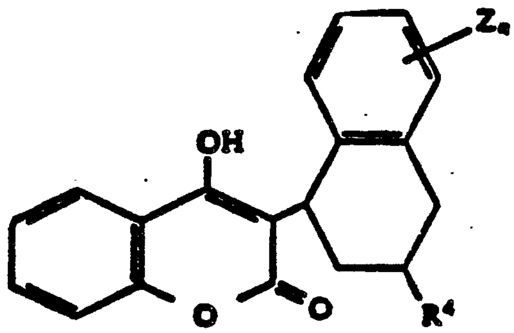

in which Z represents a halogen atom, preferably a chlorine atom, and n is 0, 1 or 2 and $R^4$ represents either (1) a grouping which comprises a phenylene radical attached directly or indirectly to the tetralin ring and having in the para position (with respect to such attachment) an electron-withdrawing atom or group whose rotational volume substantially does not exceed that of a phenyl group and which forms together with said phenylene radical a polarisable structure, or (2) a grouping selected from:

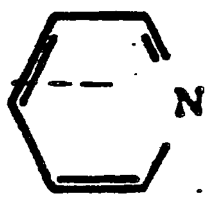 or 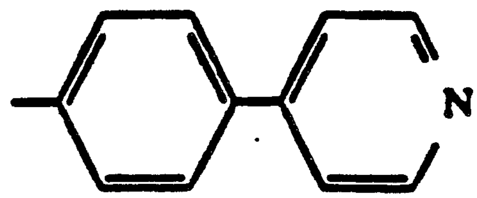 or

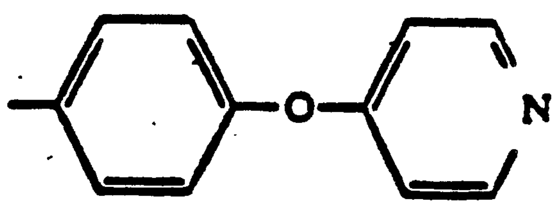

or (3) a grouping which comprises a phenylene radical attached directly to the tetralin ring and having in the para position (with respect to such attachment) a substituted furanyl or thiophenyl radical attached thereto directly or through oxygen and/or methylene, said furanyl or thiophenyl radical having an electron-withdrawing atom or group as a substituent in a position forming with the furanyl or thiophenyl radical a polarisable structure, said atom or group having a rotational volume which substantially does not exceed that of a phenyl group and halogenated derivatives thereof.

Preferred compounds are those in which $R^4$ represents a grouping (1) above, which includes a phenylene radical. When such phenylene radical is attached directly, or through another phenylene radical only, or through an oxygen atom and another phenylene radical to the tetralin ring the electron--withdrawing atom or group should not be a halogen atom. Preferably, the just-stated preferred compounds are compounds in which the $R^4$ substituent in the tetralin ring contains two-linked phenylene radicals, the outer one being attached to the para position of the inner one (itself attached in the para dash position to the tetralin ring) by a linear or essentially linear radical selected from: $-O-(CH_2)_m-$; $-(CH_2)_m-O-$; $-O-(CH_2)_m-O-$; $--(CH_2)_m-O-(CH_2)_p-$; $-(CH_2)_m-$; and the sulphur analogues thereof, in which m is 1 to 6 and p is 1 to 6. When said linking radical is $-(CH_2)_m-$, it is noted that such a radical represents the specific selection of a chain of from 1 to 6, preferably 2 to 4, more preferably 3, methylene radicals.

Most preferred are the compounds wherein Z is chlorine, n is 0, 1 or 2 and $R^4$ represents

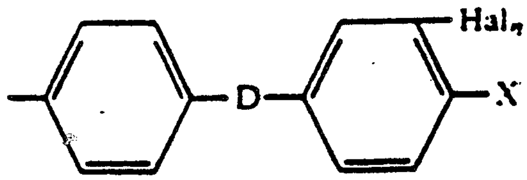

in which Hal is a fluorine or chlorine atom and n is 0 or 1, X is a fluorine, chlorine or bromine atom or a -CN, $-CF_3$ or $-OCF_3$ group and D represents $-OCH_2-$ or $-(CH_2)_m-$ where m is 2 to 3: and most especially the compound 4-hydroxy-3-(1,2,3,4-tetrahydro-3-[4-(4-trifluoromethylbenzyloxy)phenyl]-1-naphthyl) coumarin represented by the formula

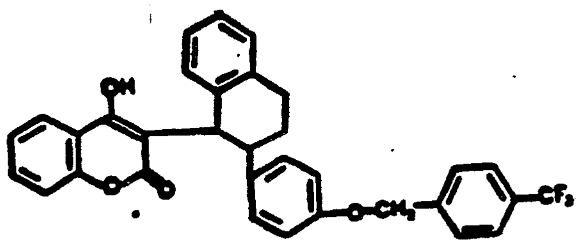

most commonly referred to as Flocoumafen. These compounds are further discussed in U.S. Patent 4,520,007.

2. Indandione derivatives, such as 1,1-diphenyl-2-acetyl-1,3-indandione, commonly referred to as Diphacinone and (1′-parachlorophenyl-1′-phenyl)-2-acetyl-1, 3-indandione, commonly referred to as Chlorodiphacinone; and

3. An alkali salt of monofluoroacetic acid.

4. Compounds of the formula

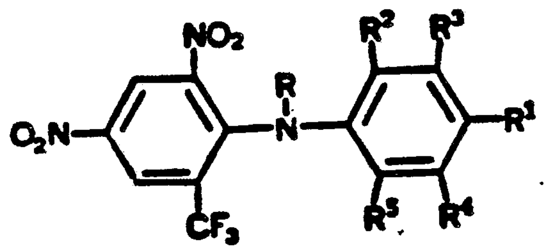

wherein

R represents methyl, ethyl or propyl;

$R^1$ represents hydrogen, fluoro, chloro, bromo, iodo, cyano, methyl, nitro or trifluoromethyl;

$R^2$ and $R^5$ independently represent hydrogen, fluoro, chloro, bromo, nitro, methyl or trifluoromethyl, provided that no more than one of $R^2$ and $R^5$ represents nitro;

$R^3$ and $R^4$ independently represent hydrogen, methyl, fluoro, chloro, bromo or trifluoromethyl; provided that

(a) no more than one of $R^1$, $R^2$, $R^3$, $R^4$ and $R^5$ represents methyl, except that $R^3$ and $R^4$ may both represent methyl;

(b) when $R^1$, $R^2$ $R^3$, $R^4$ or $R^5$ represents methyl or fluoro, two or three of $R^1$, $R^2$ and $R^5$ represent chloro or bromo;

(c) no more than one of $R^1$, $R^2$, $R^3$, $R^4$ and $R^5$ represents trifluoromethyl, except that $R^3$ and $R^4$ may both represent trifluoromethyl;

(d) when $R^2$ or $R^5$ represents trifluoromethyl, $R^1$ represents chloro or bromo;

(e) when one and only one of $R^3$ and $R^4$ represents trifluoromethyl, two or three of $R^1$, $R^2$ and $R^5$ represent chloro or bromo;

(f) no more than four of $R^1$, $R^2$, $R^3$ $R^4$ and $R^5$ represent hydrogen;

(g) two fluorine atoms are not adjacent to each other;

(h) when $R^2$ or $R^5$ represents nitro, $R^1$ represents chloro, bromo or nitro;

(i) when $R^1$, $R^2$, $R^3$, $R^4$ and $R^5$ represents trifluoromethyl, none of $R^1$, $R^2$, $R^3$, $R^4$ and $R^5$ represents fluoro or methyl.

These compounds are disclosed in U.S. Patent No. 4,187,318. Especially preferred is the compound wherein R is $-CH_3$, $R^1$, $R^2$ and $R^5$ are bromine and $R^3$ and $R^4$ are hydrogen, i.e. N-methyl-2,4-dinitro-N-(2,4,6-tribromophenyl)-6-(trifluoromethyl) benzene-amine, more commonly referred to as Bromethalin.

5.Vitamin D compounds, such as calciferol (ergocalciferol) and cholecalciferol. Such compounds are especially preferred when used in combination with any other rodenticide referred to herein.

Further included as compounds in this invention, are the 4-hydroxy coumarin derivatives Dicoumarol, Coumatetraly and Coumachlor and the indanedione derivative Pindone.

Further, appropriate metal, amine and ammonium salts of the aforementioned compounds may be employed.

The compounds useful as rodenticides in this invention are more fully discussed in Kirk-Othmer, Encyclopedia Of Chemical Technology, Vol. 18, 3rd Edition, pps. 308-318 (1982), which is hereby incorporated by reference along with the references discussed therein. Further, combinations of the above rodenticides may also be employed.

Of the above rodenticides, especially preferred are brodifacoum, warfarin, difenacoum and their metal, ammonium and amine salts.

Further, the toxicant of this invention may comprise any liquid or solid herbicide, fungicide, plant growth regulator (PGR) or insecticide.

Representative herbicides useful in this invention include those disclosed in U. S. Patent Nos. 3,799,758; 3,977,860: and 4,405,531; 4,031,131; 4,285,723: 4,424,393 and 4,400,530. Especially useful are diphenyl ether compounds of the formula

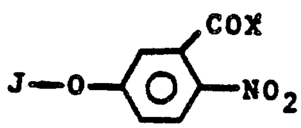

and salts thereof,
wherein

J is 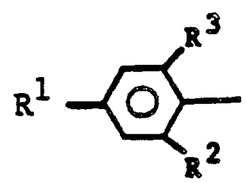 ;

$R^1$ is a fluorine, chlorine, bromine, or iodine atom or a trifluoromethyl group;
$R^2$ is a hydrogen, fluorine, chlorine, bromine or iodine atom or a trifluoromethyl group;
$R^3$ is a hydrogen, fluorine, chlorine, bromine or iodine atom, or a $C_1$-$C_4$ alkyl, trifluoromethyl, or cyano group;
X is

$$-OR^5$$
$$-N(R^8)_2$$
$$-NR^6SO_2R^8$$
$$-O-\left(\begin{matrix}CH\\ |\\ R^4\end{matrix}\right)_y-\underset{\underset{O}{\|}}{C}-B$$

$R^4$ is $R^5$ or an acyl radical of the formula $\underset{\underset{O}{\|}}{C}$-Alk

wherein Alk is a $C_{1-6}$ alkyl group;

$R^5$ is a hydrogen atom or a $C_{1-6}$ alkyl group optionally substituted with either one or more halogen atoms or a phenyl group;
B is a $C_{1-10}$ alkyl, $OR^7$ or $SR^7$;
y is 1 to 4;
$R^6$ is a hydrogen atom or a $C_{1-2}$ alkyl group;
$R^7$ is hydrogen, or a $C_{1-8}$ alkyl or $C_{3-8}$ cycloalkyl group, an agronomically acceptable cationic salt, or a

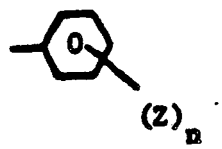

group wherein n is 0 to 3;
Z is selected from the group consisting of a halogen atom or a $C_{1-10}$ alkyl or $C_{1-10}$ alkoxy group, cyano, nitro, and trifluoromethyl group; and
$R^8$ is $R^5$ or a $C_{1-6}$ alkoxy group. Particularly effective are those wherein

A. $R^1$ is a chlorine atom or a trifluoromethyl group;
$R^2$ is a hydrogen or fluorine atom
$R^3$ is a chlorine atom; and
X is $-OR^4$ or $NR^6SO_2R^8$ wherein
$R^4$ is a hydrogen atom;
$R^6$ is a hydrogen atom; and
$R^8$ is methyl or ethyl.
Especially preferred are the compounds wherein

(i) X is $-OR^4$; $R^1$ is $-CF_3$; $R^2$ is -H; $R^3$ is -C1; and $R^4$ is hydrogen;
(ii) X is $-OR^4$ $R^1$ is $-CF_3$; $R^2$ is -F; $R^3$ is -C1; and $R^4$ is hydrogen;
(iii) X is $-NR^6$ $SO_2$ $R^8$; $R^1$ is $-CF_3$; $R^2$ is -H $R^3$ is -C1; $R^6$ is -H and $R^8$ is $-CH_3$; commercially known as fomesafen;
(iv) X is $-NR^6$ $SO_2$ $R^8$; $R^1$ is $-CF_3$; $R^2$ is -H or -F; $R^3$ is -C1; $R^6$ is -H; and $R^8$ is $-C_2H_5$.

B. $R^1$ is a halogen atom or a trifluoromethyl group;
$R^2$ is hydrogen or halogen;
$R^3$ is hydrogen, halogen, cyano, trifluoromethyl, or a $C_{1-4}$ alkyl group

X is 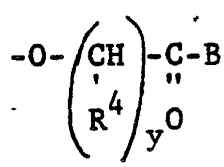

y is 1;
$R^4$ is selected from the group consisting of hydrogen, $C_{1-4}$ alkyl, and hydroxy alkyl ($C_{1-4}$);
B is $SR^7$ or $-OR^7$;
$R^7$ is hydrogen, or a $C_{1-8}$ alkyl group, a $C_{3-8}$ cycloalkyl group or an agronomically acceptable cationic salt, or a

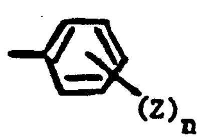

group wherein n is 0 to 3 and Z is selected from the group consisting of halogen, a $C_{1-10}$ alkyl or alkoxy group, cyano, nitro, and trifluoromethyl.
Especially preferred are those compounds wherein

X is 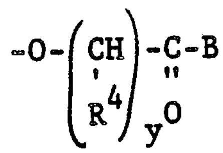

y is 1;
B is $-OR^7$, $R^7$ is $-C_2H_5$, $R^4$ is either -H or $-CH_3$;
$R^1$ is trifluoromethyl;
$R^3$ is chlorine; and
$R^2$ is H.

Representative insecticides for use in this invention are those of the pyrethrin type and in particular those of the formula:

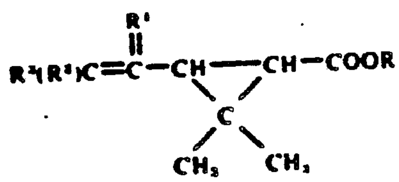

wherein $R^1$ represents hydrogen or a methyl group: $R^2$ represents hydrogen or a halogeno or alkyl group: $R^3$ represents hydrogen or a halogeno, alkyl (which differs from $R^2$ when $R^2$ represents an alkyl group) or carboalkoxy group which contains at least 2 carbon atoms in the alkoxy residue when $R^2$ and $R^3$ together with the carbon atom to which they are attached represent a cycloalkylene ring having at least one endocyclic carbon to carbon double bound: with the provision that (a) $R^2$ and $R^3$ each represent hydrogen only when $R^1$ represents methyl and (b) $R^3$ contains at least 2 carbon atoms when $R^1$ and $R^2$ each represent hydrogen and (c) when one of $R^2$ and $R^3$ represents halogeno, the other of $R^2$ and $R^3$ represents hydrogen or halogen or carboalkoxy: and R represents (a) hydrogen (or a salt of acid halide derivative of the acid) or any alkyl group, or (b) a group of formula

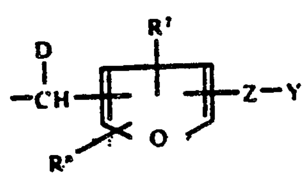

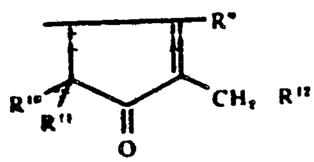

or

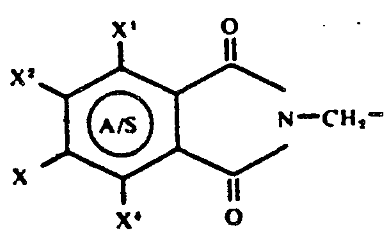

or

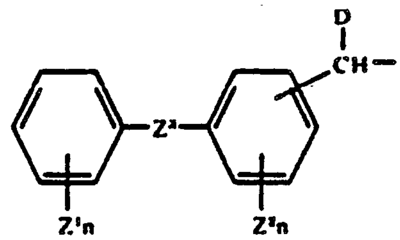

or

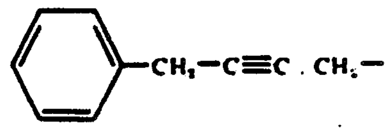

or

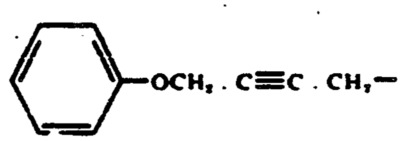

wherein Z represents O, S, $CH_2$ or CO. Y represents hydrogen or an alkyl, alkenyl or alkynyl group or an aryl or furyl group which is unsubstituted or substituted in the ring by one or more alkyl, alkenyl, alkoxy or halogeno groups, $R^7$ and $R^8$, which may be the same or different, each represent hydrogen or an alkyl, or alkenyl group,

$R^9$ represents hydrogen or a methyl group,

$R^{10}$ and $R^{11}$, which may be the same or different, each represent hydrogen or an alkyl group,

$R^{12}$ represents an organic radical having carbon-carbon unsaturation in a position alpha to the $CH_2$ group to which $R^{12}$ is attached.

A/S indicates an aromatic ring or a dihydro or tetrahydro analogue thereof,

$X^1$, $X^2$, $X^3$ and $X^4$, which may be the same or different, each represent hydrogen, chlorine or a methyl group,

$Z^3$ represents $-CH_2-$ or -O- or -S- or -CO-,

D represents H, CN or $-C{=}CH$, $Z^1$ and $Z^2$, which may be the same or different, each represent chlorine or a methyl group and $n = 0$, 1 or 2, with the proviso that R does not represent hydrogen (or an acid chloride derivative of the acid) or an ethyl or allethronyl group when $R^1$ represents hydrogen, $R^2$ and $R^3$ each represent chlorine and the compound is racemic. Especially preferred are those compounds wherein $R^1$ is hydrogen, $R^2$ and $R^3$ independently represent halogen, and R is a substituted or unsubstituted aromatic group, including, but not limited to, alpha-cyano-3-phenoxybenzyl. Such compounds are disclosed in U. S. Patent No. 4,024,163.

Further preferred insecticides are those of the formula:

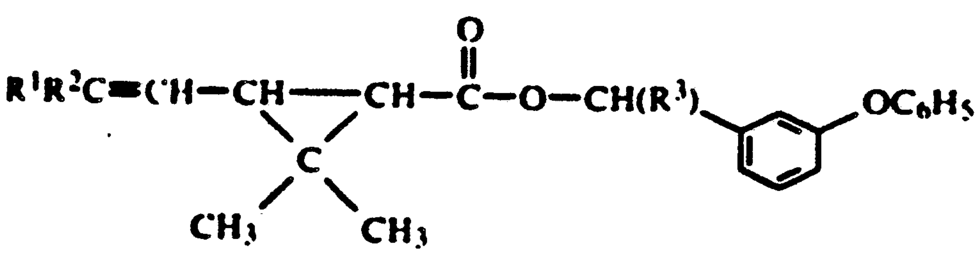

wherein one of $R^1$ and $R^2$ represents a group of formula:

$W-(CF_2)m$

where W represents an atom of hydrogen, flourine or chlorine and m has the value one or two, and the other $R^1$ and $R^2$ represents an atom of flourine, chlorine or bromine or a group of formula:

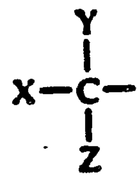

where each of X, Y and Z independently represents an atom of hydrogen, flourine or chlorine, and $R^3$ represents an atom of hydrogen or the cyano or ethynyl group.

Particularly useful is alpha-cyano-3-phenoxy benzyl cis-3-(Z-2-chloro-3,3,3-trifluoroprop-1-en-1-yl)-2,2-dimethylcyclopropane carboxylate, commonly known as cyhalothrin. Such compounds are disclosed in U.S. Patent No. 4,183,948.

Further representative insecticides for this invention are disclosed in U.S. Patent Nos. 2,732,409 and 2,934,470.

Representative fungicides for use in this invention include those disclosed in U.S. Patent Nos. 3,290,353; 3,331,735; and 4,518,415.

Representative Plant Growth Regulators which may be employed in this invention include those disclosed in U.S. Patent Nos. 4,586,947; 4,243,405; 4,436,548: 4,554,285; 4,380,546: 3,967,949: 4,002,628 and Re. 29,367; Japanese Patent Application (Laid-open) No. 124,771/1980 and Japanease Patent Application No. 100,547/1980, Great Britain Patent No. 2,046,260 and U.S. Patent No. 4,435,203.

Especially preferred for use in the present invention is the diastereomer (enantiomers pair) (2RS,3RS)-1-(4-chlorophenyl-4,4-dimethyl-2-1,2,4-triazol-1-yl)pentan-3-ol of the following formula (II):

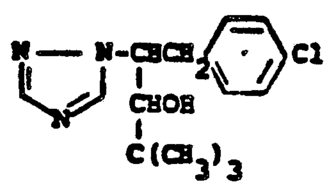

and the individual enantiomers thereof.

The composition of this invention must employ a pesticidal effective amount of toxicant. Typically, the total amount of toxic pesticide employed in the composition is between 0.01 and 95.0 percent of the total weight of the composition.

The composition of this invention may optionally also contain a diluent or carrier. This diluent/carrier serves in a two-fold fashion. First, it decreases the pour point of the composition thus facilitating the transformation of the transportable composition to a liquid at its destination. Second, it decreases the amount of solid surfactant necessary to attain the requisite viscosity. Acceptable diluents include water and such organic solvents as ethers, polyols, monohydric alcohols and petroleum hydrocarbons including such aromatic hydrocarbons as toluene and xylene. Especially preferred are branched or linear $C_{1-6}$ alcohols, $C_2$-$C_5$ glycols (such as ethylene glycol, propylene glycol and glycerine) and diglycolethers.

Acceptable carriers include inorganic fillers such as clays (e.g. kaolin, attapulgite, diatomaceous earth, white carbon, Fubasami clay, bentonite, terra abla, synthetic hydrated silicon dioxide), dolmite, talcs, mica, other inorganic minerals (e.g. sericite, quartz powder, sulfur powder, activated carbon, pumice, calcium carbonate, hydrated silica), aluminum silicate, limestone, fumed silica, magnesium sulfate, magnesium silicate, alumina trihydrate, magnesium oxide, zinc oxide, calcium phosphate, ground brick, fly ash: and inorganic fertilizers (e.g. ammonium sulfate, ammonium phosphate, ammonium nitrate, urea, or ammonium chloride). Also organic materials, such as, for example, walnut shell flour, cotton-seed hulls, wheat flour, wood flour, wood bark flour, soybean powder, chestnut shell powder, sawdust and wheat bran may be used as carrier.

Further, combinations of the above diluents/carriers may also be employed. The total amount of such components in the composition is generally less than 90%, preferably between 30-80%, based on the weight of the total composition.

Further, when a rodenticide is desired as toxicant, it is often preferred to employ a metal, amine or ammonium salt derivative. Such derivatives include the reaction product of one of the aforemen tioned rodenticidal compounds, and a salt-forming agent selected from the group consisting of:

(i) a metal selected from sodium or potassium or the respective hydroxides;

(ii) any conventional amine known in the art and particularly alkanolamines of the formula $N[(C_nH_{2n})_yOH]_X (H)_z$ wherein n=1 to 6, x and y are independently 1 to 3, z is 0 to 2 and further wherein x+z=3. Especially preferred is the alkanolamine wherein n = 2, y = 1 and x = 3.

When the rodenticidal soluble salt is formed in one of the above deferred in situ processes, the amount of salt-forming agent employed is between 3-50%, preferably 3-20% based on the weight of the total composition.

The composition to be transported can be produced by simultaneously mixing the solid surfactant and pesticide (and diluent/carrier, if desired) and agitating the mixture until uniform. This occurs at a temperature between 20° and 80° C, most preferably at 50° C. Generally the mixture becomes uniform after 30 seconds to 24 hours depending on such factors, well known to one skilled in the art, such as volume, agitator shear, temperature of the reaction vessel, and product solubility. The mixture is then permitted to solidify by cooling it to a temperature less than the pour point, generally below 35° C.

Alternatively, the solid matrix is prepared by heating the solid surfactant and diluent, if desired, to a temperature in excess of its pour point and adding thereto the pesticide with agitation. The molten matrix is cooled with agitation to ensure uniform distribution upon solidification.

If an amine or ammonium salt of a rodenticide is employed, the appropriate salt-forming agent may be simultaneously mixed with the other components. Preferably, a metal, ammonia or amine rodenticidal salt may be formed prior to admixing it with the surfactant.

The above preparative methods for producing the composition to be transported can take place in the shipping container per se. Alternatively the solid matrix can be formed in a reaction vessel or mixer/extruder and then transferred to the desired shipping container or the liquid mixture can be transferred to the desired shipping container and solidified therein by cooling.

The composition is transported to its destination in a sealed container. The container must not be reactive with the composition and is usually a steel or plastic drum. The temperature of the composition in the sealed container during transport must be less than the pour point, which typically is between 35 and 65° C.

Once the sealed container reaches its destination, the container is either opened or vented. The solid matrix can be liquefied, if desired, by heating it to a temperature in excess of its pour point or a combination of heat and agitation.

Any common agitation method may be employed such as a homogenous mixer, e.g. a paddle mixer, Brinkman homogenizer, Lightning mixer or Cowel mixer. Generally, such agitation is permitted to proceed for between 30 minutes and 8 hours at temperatures greater than the pour point in order to render a liquid solution. This time is further dependent upon the batch size, the melting point of the pesticidal composition and the reaction temperature.

While the contents of the container can be emptied into a vessel prior to heating, it is generally easier to heat the shipping container itself. This can be readily achieved by placing the container in a hot room, placing an electrical resistance heating band around the container or heating the container with a steam hose or water bath.

Further, the composition may be reverted to a liquid state by agitating in the presence of between 5-90 weight % of water or an organic solvent, such as, for example, ethers, polyols, monohydric alcohols, petroleum hydrocarbons such as toluene and xylene, N-methylpyrrolidone, dimethyl sulfoxide or combinations thereof. Preferred are branched or linear $C_{1-6}$ alcohols, $C_{2-5}$ glycols (such as ethylene glycol, propylene glycol, and glycerine) and diglycolethers. This solvent may be added prior to or during agitation. Further heat may be employed to facilitate the reaction.

While the description of the invention herein has been limited to a pesticidal formulation and a method of transporting the same, it may be adapted for any toxicant by substituting the above-described pesticide with the desired toxicant to be transported.

## EXAMPLES

The following non-limiting examples are presented to further illustrate the invention and the advantages thereof. In the Examples :

-- TRYCOL OAL-23 refers to a polyoxyalkylated (23 moles) oleyl alcohol, obtainable from Emery Industries;

-- TRYCOL NP-30 refers to a condensation product of one mole of nonyl phenol and 30 moles of

ethylene oxide, obtainable from Emery Industries;

-- PEG 2000 refers to Polyethylene Glycol 2000, Carbowax PEG 2000; PEG 1450 refers to Polyethylene Glycol 1450, Carbowax PEG 1450; PEG 200 refers to Polyethylene Glycol 200, Carbowax PEG 200, all obtainable from Union Carbide Company;

-- Carbopol 140 refers to an acrylic acid polymer, obtainable from B.F. Goodrich Co.;

-- PLURONIC P-104, refers to a block copolymer of ethylene oxide and propylene oxide, obtainable from BASF Wyandotte; and

-- Stirrer refers to a T-line laboratory stirrer equipped with paddle blade, obtainable from VWR Scientific Company.

Example 1

To a 150 ml beaker was added 10 grams TRYCOL OAL-23, 73 grams of TRYCOL NP-30, and 14.3 grams PEG-1450. The mixture was heated in a water bath to approximately 50° C. Once molten, the mixture was stirred using a stirrer until a uniform molten liquid was obtained, approximately 5 minutes. 2.7 grams brodifacoum (87.7% ai) was then added to the molten mixture which was stirred for 30 minutes at a temperature between 50° and 75° C. The mixture was then allowed to cool. The mixture solidified at, and could be transported at a temperature less than, 38° C.

Example 2

80 grams of propylene glycol, 6 grams of triethanolamine, 6 grams of PEG 200 and 8 grams of water were stirred until homogenous, approximately 5 minutes. To 90 grams of the solution was added 10 grams of the mixture from Example 1 at 60° C. The resulting liquid mixture was stirred at room temperature for approximately 5 minutes. The resulting liquid, stable at room temperature, was extremely effective as a rodenticide.

Example 3

To a 150 ml beaker was added 87.3 grams of TRYCOL NP-30, and 10 grams of TRYCOL OAL-23. The mixture was heated in a water bath, approximately 50° C. A molten mixture was then obtained by agitating the mixture with a stirrer for approximately 5 minutes. To the molten mixture was added 2.7 grams of brodifacoum technical (87.7% ai). The mixture was stirred for approximately 15 minutes. The resulting solution was allowed to cool and solidify.

Example 4

80 grams of propylene glycol, 6 grams of triethanolamine, 6 grams of PEG 200 and 8 grams of water were stirred at room temperature until homogenous, approximately 5 minutes. To 90 grams of the solution was added 10 grams of the molten solution of Example 3 at 60° C. The resulting liquid mixture was stirred at room temperature for approximately 5 minutes. The resulting liquid, stable at room temperature, was extremely effective as a rodenticide.

Example 5

To a 250 ml beaker was added 57.3 grams TRYCOL NP-30 and 40 grams of TRYCOL NP-40. The mixture was heated to a temperature slightly in excess of 55° C until a clear fluid was obtained. While

agitating with a stirrer, 2.7 grams of brodifacoum (87.7% ai) was added. Agitation was continued until the solid pesticide was dissolved. The resulting hot melt solution was then poured into an 8 ounce jar and allowed to cool and solidify. The composition had a melting point of 45.5° C. The mixture could be transported in a sealed jar. When diluted to 0.25% ai with a solution of 80 grams of propylene glycol, 6 grams of triethanolamine, 6 grams of PEG 200, and 8 grams of water and formulated into a 50 ppm meal, 9 out of 10 rats were killed in a 24 day period.

### Example 6

A 2.5% active ingredient brodifacoum concentrate was prepared using 77.3 grams TRYÇOL NP-30, 20.0 grams PEG 1450 and 2.7 grams brodifacoum technical (at 92.6% ai). These ingredients were blended in a beaker at approximately 60° C until a clear, slightly yellow solution was obtained. The solution was then placed in an 8 ounce jar and cooled. A homogenous solid with a 38° C melting point was obtained. The jar could be sealed and the solidified composition transported to a remote destination.

### Example 7

A 2.5% active ingredient brodifacoum concentrate was prepared using 10 grams TRYCOL OAL-23, 67.3 grams TRYCOL NP-30, 20 grams PEG 2000 and 2.7 grams brodifacoum technical (at 92.6% ai). These ingredients were blended in a beaker at approximately 60° C until a clear, slightly yellow solution was obtained. The solution was then placed in an 8 ounce jar and cooled. A homogenous solid with a 38° C melting point was obtained. The jar could be sealed and the solidified composition transported to a remote destination.

### Example 8

A 5.0% active ingredient brodifacoum concentrate was prepared using 63.6 grams of TRYCOL NP-30, 20 grams PEG 2000, 6.4 grams brodifacoum technical and 10.0 grams TRYCOL OAL-23. These ingredients were blended in a beaker at approximately 60° C until an opaque white suspension was obtained. The suspension was cooled while stirring with a stirrer to render a solid with a melting point of 41.5° C.

### Example 9

To 5 grams of the composition of Example 8 was added 95 grams of the following mixture:
86.5 grams propylene glycol
1.5 grams Durazol red 2B 110 liquid
6.0 grams PEG 200
6.0 grams Triethanolamine

until 0.25% ai was obtained. The resulting solution was applied neat to whole grain and to meal mixture to produce an effective rodenticide.

### Example 10

To a 150 ml beaker was added 87.3 grams of PLURONIC P-104 and 10 grams of TRYCOL OAL-23. The mixture was heated in a water bath, approximately 60° C. A molten mixture was then obtained by agitating the mixture with a stirrer for approximately 25 minutes. To the molten mixture was added 2.7 grams of brodifacoum technical (87.7% ai). The mixture was stirred for approximately 15 minutes. The

resulting solution was allowed to cool and solidify.

Examples 11-13

To each of three 150 ml beakers was added at 55°C 10 grams TRYCOL OAL-23, 45.7 TRYCOL NP-30, and 14.3 grams PEG 1450. The resulting mixture was agitated with a stirrer until a uniform molten mixture was obtained, approximately 5 minutes. The following was then added to the respective beaker:

Beaker 1: 30 grams of cyhalothrin;
Beaker 2: 30 grams of fomesafen;
Beaker 3: 30 grams of (2RS,3RS)-1-(4-chlorophenyl-4,4-dimethyl-2-1,2,4-triazol-1-yl)-pentan-3-ol

The mixture was stirred for 30 minutes. The resulting mixture was then permitted to cool and solidify at approximately 40°C. The resulting compositions can be transported.

Example 14

20 grams of the composition of Example 12 (beaker 2) is separately added to a 150 ml beaker containing 80 grams of water. To the resulting dispersion is added caustic sodium hydroxide until a pH of 8.1 is obtained. The resulting solution is stable and can be applied as a pesticidal formulation.

Example 15

34 grams of the composition of Example 13 (beaker 3) is separately added to a 150 ml beaker containing 66 grams of methanol. The resulting dispersion is stirred for approximately 20 minutes until a uniform dispersion of active ingredient is obtained. The resulting solution is stable and can be applied as a pesticidal formulation.

**Claims**

1. A process for transporting toxic material consisting of:

(a) preparing a composition comprising between 0.01 and 95.0 percent weight of the toxic material, 5 to 99.9 percent weight of one or more solid surfactants and optionally a diluent, a carrier and a salt forming agent, at a temperature above the pour point of the composition,

(b) converting said composition into a solid matrix by cooling to below the pour point,

(c) transporting, and optionally storing the solid matrix prior to or post transportation, at a temperature below the pour point of the solid matrix,

(d) liquifying the solid matrix at the destination by either heating to above the pour point, addition of solvent, or a combination of both heating and solvent.

2. A process according to Claim 1 wherein the solid matrix is transported and optionally stored in a sealable container.

3. A process according to Claim 2 wherein the composition is prepared in and cooled to form the solid matrix in said container.

4. A process according to any of the preceding claims wherein the solid surfactant is selected from the group consisting of polyoxyalkylated alkyl phenols, polyaryl phenol ethoxylates, sorbitan fatty acids and polyoxyalkylated derivatives thereof, polyoxyalkylated branched or linear mono alcohols, diols or polyols, polyoxyalkylated esters and ethylene oxide propylene oxide block copolymers.

5. A process according to any of the preceding claims wherein said toxic material is a pesticide selected from the group consisting of a rodenticide, herbicide, fungicide, plant growth regulator or insecticide.

6. A process according to Claim 5 wherein the rodenticide is selected from the group consisting of:

(i) a compound of the formula

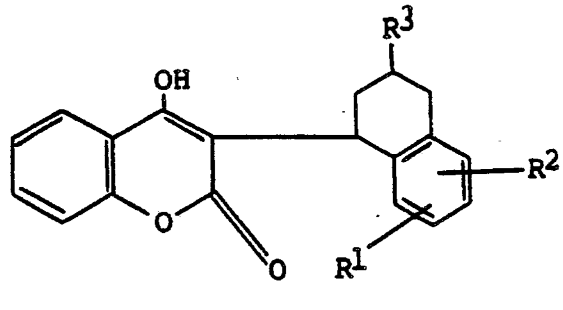

wherein

$R^1$ and $R^2$ are independently selected from the group consisting of hydrogen, halogen, a $C_1$-$C_6$ alkyl and a $C_1$-$C_6$ alkoxy group;

$R^3$ is an aryl group having the formula

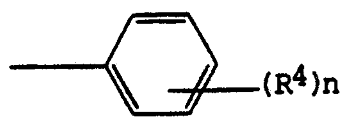

where n is 1 or 2, and

each $R^4$ is independently selected from the group consisting of halogen, a $C_2$-$C_{12}$ alkyl, a $C_2$-$C_{12}$ alkoxy group, cyclohexyl, benzyl, phenyl, halogenophenyl, phenoxy and halogenophenoxy provided that $R^3$ contains not more than 3 halogen atoms;

(ii) a compound of the formula

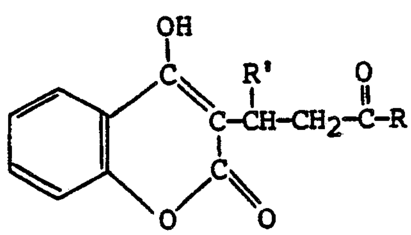

in which R represents a member of the class consisting of $C_{1-6}$ alkyl groups, phenyl and hydroxy-substituted phenyl groups; and $R'$ represents a member of the class consisting of $C_{1-6}$ alkyl groups, phenyl and phenyl groups containing a substituent of the formula $OR'$ in at least one of the para or meta positions, wherein $R'$ is hydrogen or a $C_{1-6}$ alkyl;

(iii) a compound of the formula

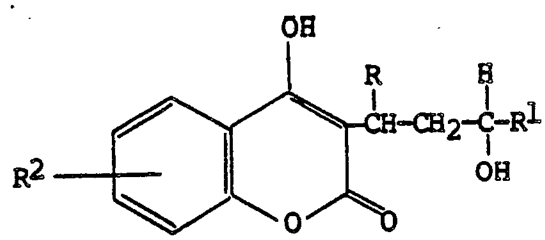

wherein
R is hydrogen; phenyl, halophenyl, dihalophenyl, nitrophenyl, methoxyphenyl, tolyl, methylene dioxyphenyl or furyl,
$R^1$ is methyl, phenyl, halophenyl, nitrophenyl, diphenyl, halodiphenyl, nitrodiphenyl and naphthyl radicals, and
$R^2$ is hydrogen or a halogen;
(iv) a compound of the formula

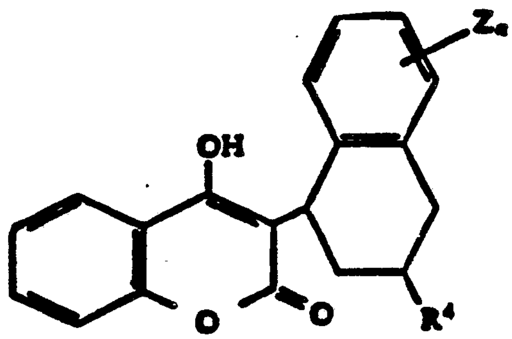

wherein
z represents a chlorine atom,
n is 0, 1 or 2, and
$R^4$ represents

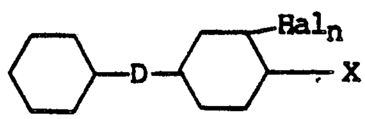

in which Hal is a fluorine or chlorine atom and n is 0 or 1, X is a fluorine, chlorine or bromine atom or a CN, $CF_3$ or $OCF_3$ group and D represents $-OCH_2-$ or $-(CH_2)m-$, where m is 2 to 3;
(v) 1,1-diphenyl-2-acetyl-1,3-indandione, and (1′-parachlorophenyl-1′-phenyl)-2-acetyl-1, 3-indandione;
(vi) an alkali salt of monofluoroacetic acid.
(vii) a compound of the formula

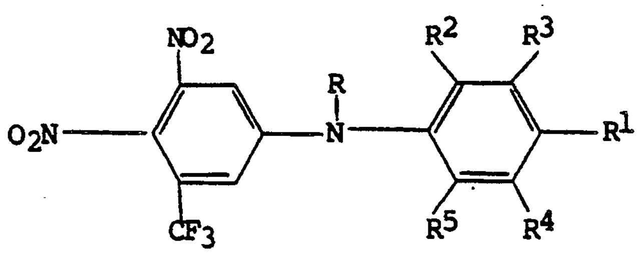

wherein
R represents a methyl, ethyl or propyl;

$R^1$ represents hydrogen, fluoro, chloro, bromo, iodo, cyano, methyl, nitro or trifluoromethyl;
$R^2$ and $R^5$ independently represent hydrogen, fluoro, chloro, bromo, nitro, methyl or trifluoromethyl, provided that no more than one of $R^2$ and $R^5$ represents nitro;
$R^3$ and $R^4$ independently represent hydrogen, methyl, fluoro, chloro, bromo or trifluoromethyl; provided that
(a) no more than one of $R^1$, $R^2$, $R^3$, $R^4$ and $R^5$ represents methyl, except that $R^3$ and $R^4$ may both represent methyl;
(b) when $R^1$, $R^2$, $R^3$, $R^4$ or $R^5$ represents methyl or fluoro, two or three of $R^1$, $R^2$ and $R^5$ represent chloro or bromo;
(c) no more than one of $R^1$, $R^2$, $R^3$, $R^4$ and $R^5$ represents trifluoromethyl, except that $R^3$ and $R^4$ may both represent trifluoromethyl;
(d) when $R^2$ or $R^5$ represents trifluoromethyl, $R^1$ represents chloro or bromo;
(e) when one and only one of $R^3$ and $R^4$ represents trifluoromethyl, two or three of $R^1$, $R^2$ and $R^5$ represent chloro or bromo;
(f) no more than four of $R^1$, $R^2$, $R^3$, $R^4$ and $R^5$ represent hydrogen;
(g) two fluorine atoms are not adjacent to each other;
(h) when $R^2$ or $R^5$ represents nitro, $R^1$ represents chloro, bromo or nitro;
(i) when $R^1$, $R^2$, $R^3$, $R^4$ and $R^5$ represents trifluoromethyl, none of $R^1$, $R^2$, $R^3$, $R^4$ and $R^5$ represents fluoro or methyl;
(viii) calciferol or cholecalciferol or a metal, ammonium or amine salt thereof.

7. A process according to any of the preceding claims further comprising less than 90 weight percent of a diluent selected from the group consisting of water, an ether, an alcohol, and a petroleum hydrocarbon.

8. A process according to Claim 7 wherein said diluent is a branched or linear $C_{1-6}$ alcohol, $C_{2-5}$ glycol, diglycolether, toluene, or xylene.

9. A process according to any of the preceding claims wherein the viscosity of said composition is greather than 150,000 cps.

10. A process according to any of the preceding claims further comprising less than 90 weight percent of a carrier selected from the group consisting of an inorganic filler or inorganic fertilizer.

11. A process according to Claim 10 wherein said inorganic filler and inorganic fertilizer are selected from the group consisting of clay, dolmite, talc, mica, sericite, quartz powder, sulfur powder, activated carbon, pumice, calcium carbonate, hydrated silica, aluminum silicate, limestone, fumed silica, magnesium sulfate, magnesium silicate, alumina trihydrate, magnesium oxide, zinc oxide, calcium phosphate, ground brick, fly ash, ammonium sulfate, ammonium phosphate, ammonium nitrate, urea and ammonium chloride.

12. A process according to Claims 1 to 9 further comprising less than 90 weight percent of a carrier selected from the group consisting of walnut shell flour, cotton-seed hulls, wheat flour, wood flour, wood bark flour, soybean powder, chestnut shell powder, sawdust and wheat bran.

13. A method of producing the composition according to any of the preceding claims which comprises:
(a) mixing with said pesticide said solid surfactant and agitating the resulting mixture at a temperature between 20° and 80° C; and
(b) solidifying the mixture by cooling it to a temperature less than its pour point.

14. A method of producing the composition according to any of the preceding claims which comprises:
(a) heating said solid surfactant to a temperature in excess of its pour point;
(b) adding to the resulting fluid said pesticide with agitation; and
(c) agitating and cooling the resulting molten matrix.

15. A method of transporting a toxicant according to any of the preceding claims which comprises:.
(a) filling a shipping container with the solid matrix;
(b) sealing the container; and
(c) transporting the sealed container at a shipping temperature less than the pour point of the solid composition.

16. The method of transforming the solid matrix according to any of the preceding claims which further comprises agitating said composition during heating.

17. A method of transforming the solid matrix according to any of the preceding claims to a liquid which comprises agitating said composition in the presence of water or an organic solvent selected from the group consisting of ethers, polyols, monohydric alcohols, petroleum hydrocarbons, N-methylpyrrolidone and dimethyl sulfoxide.